# EUROPEAN PATENT APPLICATION

(11) **EP 4 614 273 A1**
(43) Date of publication of application: **10.09.2025**
(21) Application number: 23885558.9
(22) Date of filing: 20.10.2023
(51) Int. Cl.: G05D 1/43, A01B 69/00

(54) **OBSTACLE DETECTION SYSTEM**

(30) Priority: 31.10.2022 JP 2022174413
(71) Applicant: Kubota Corporation, Osaka 556-8601 (JP)
(72) Inventor: HASEGAWA Hirokazu, Sakai-shi, Osaka 590-0908 (JP); YUASA Junichi, Sakai-shi, Osaka 590-0908 (JP); TAMAI Takuya, Sakai-shi, Osaka 590-0908 (JP)
(74) Representative: Müller-Boré & Partner Patentanwälte PartG mbB
(86) International application number: PCT/JP2023/038053
(87) International publication number: WO 2024/095798

(57) **Abstract**

Provided is an obstacle detection system for a work vehicle which obstacle detection system can efficiently perform an arithmetic processing operation. The obstacle detection system includes: an image capturing section (3) configured to generate and output a captured image of an obstacle detection target area; an obstacle positional information acquisition section (51) configured to acquire obstacle positional information on an obstacle in the obstacle detection target area; a learning-type obstacle detection unit (6) trained to output obstacle detection information including a detection result of the obstacle based on an input image; and an image transfer processing section (5) configured to transmit the input image based on the captured image to the obstacle detection unit (6) at a predetermined time interval. The image transfer processing section (5) includes a time interval change section (55) configured to change the time interval based on the obstacle positional information.

## Description

### Technical Field

The present invention relates to an obstacle detection system for a work vehicle.

### Background Art

An obstacle detection system for a farm work vehicle, disclosed in Patent Literature 1, includes: an obstacle estimation section configured to estimate an obstacle presence area in a farm field based on a detection signal from an obstacle sensor and to output obstacle presence area information, the obstacle sensor being configured to detect an obstacle in the farm field; an image capturing section configured to output a captured image of the farm field; an image preprocessing section configured to trim the captured image based on the obstacle presence area information and image-capture field angle information of the image capturing section in such a manner that a trimmed image includes the obstacle presence area; and an obstacle detection unit configured to receive the trimmed image thus generated by the image preprocessing section as an input image. The obstacle detection unit outputs obstacle detection information including an obstacle detection result.

### Citation List

### Patent Literature

Patent Literature 1: Japanese Unexamined Patent Application Publication No. 2021-6011

### Summary of Invention

### Technical Problem

Most captured images input into the obstacle detection unit include no obstacle, but the obstacle detection unit sometimes receives a captured image including an obstacle. Accordingly, the obstacle detection unit is given as high an arithmetic processing capability as possible so that an obstacle detection process is performed on all captured images input into the obstacle detection unit regardless of whether the captured images include an obstacle or not, and the obstacle detection process is quickly performed with high reliability. This causes problems such as heat generation or high power consumption in a computing processor of the obstacle detection unit. In the obstacle detection system in Patent Literature 1, when an obstacle is detected and the position of the obstacle is estimated, the obstacle detection unit receives an image that is cut out from the captured image of the farm field in such a manner as to include a presence region of the obstacle, and hereby, the accuracy of obstacle detection of the obstacle detection unit is just improved. In the obstacle detection unit in the related art, it is not considered to achieve an effective arithmetic processing operation by changing the frequency of obstacle detection arithmetic processing based on whether or not an input captured image (input image) includes an obstacle.

In view of such circumstances, an object of the present invention is to provide an obstacle detection system for a work vehicle which obstacle detection system can efficiently perform an arithmetic processing operation.

### Solution to Problem

An obstacle detection system for work vehicles, according to the present invention, includes: an image capturing section configured to generate and output a captured image of an obstacle detection target area; an obstacle positional information acquisition section configured to acquire obstacle positional information on at least one obstacle in the obstacle detection target area; a learning-type obstacle detection unit trained to output obstacle detection information including a detection result of the at least one obstacle based on an input image; and an image transfer processing section configured to transmit the input image based on the captured image to the obstacle detection unit at a predetermined time interval. The image transfer processing section includes a time interval change section configured to change the time interval based on the obstacle positional information.

In this configuration, a time interval at which an input image is sequentially transmitted to the obstacle detection unit configured to output obstacle detection information based on the input image is changeable based on obstacle positional information on an obstacle in the obstacle detection target area. Accordingly, a frequency of inputting an important captured image requiring precise obstacle detection process computing as the input image and a frequency of inputting a less important captured image as the input image can be made different. A captured image more likely to include an obstacle can be transmitted to the obstacle detection unit at a high frequency as compared with a captured image less likely to include an obstacle. This can achieve an effective processing operation of the obstacle detection unit.

An obstacle position detection unit configured to transmit the obstacle positional information to the obstacle positional information acquisition section should accurately detect a three-dimensional position of an obstacle in at least the obstacle detection target area, for example, in a predetermined area in the advancing direction of the work vehicle. A presence area of the obstacle in the captured image is estimated from an accurate position of the obstacle based on the obstacle positional information, and when the obstacle detection unit receives an image including the obstacle as the input image at a high frequency, the obstacle detection unit can output highly accurate obstacle detection information. The obstacle position detection unit suitable for this purpose is a millimeter wave radar unit, a LiDAR unit, or a stereo camera unit. In view of this, in the present invention, the obstacle positional information acquisition section may acquire the obstacle positional information including a three-dimensional position of the at least one obstacle from an obstacle position detection unit including at least one of a millimeter wave radar unit, a LiDAR unit, and a stereo camera unit.

In the present invention, the captured image may be classified as an obstacle absence image including no obstacle or an obstacle presence image including the at least one obstacle based on the obstacle positional information and the captured image, and the image transfer processing section may transmit the obstacle presence image to the obstacle detection unit as the input image at a frequency higher than a frequency of transmitting the obstacle absence image to the obstacle detection unit as the input image. In this configuration, the obstacle detection unit receives, as the input image, the obstacle presence image more likely to cause the obstacle detection unit to output more important obstacle detection information at a frequency higher than the obstacle absence image, so that the obstacle detection unit works efficiently. An algorithm configured not to transmit the obstacle absence image to the obstacle detection unit as the input image is also usable. However, the obstacle detection unit may detect, from the obstacle absence image, an obstacle not detected by the obstacle position detection unit. In view of this, it is also advantageous to transmit the obstacle absence image to the obstacle detection unit as the input image even at a low frequency.

In order to generate an obstacle presence image including an area including an obstacle from a captured image, the area including the obstacle on the captured image may be calculated based on obstacle positional information and extracted by trimming. On this occasion, the size of a trimmed image is at least equal to or less than the size of the captured image. Accordingly, when this trimmed image is used as the input image, a total computing load to the obstacle detection unit to detect the obstacle is restrained. In view of this, in the present invention, the image transfer processing section may include a trimming section configured to generate, as the input image, a trimmed image by extracting an area including the at least one obstacle from the captured image as a trimmed area by trimming based on the obstacle positional information.

In a case where the input image is the trimmed image substantially constituted by the obstacle area, the frequency of inputting the input image should be increased to increase detection accuracy. In view of this, as one of preferable examples of the configuration in which the input image is the trimmed image as the obstacle presence image, the image transfer processing section may transmit the trimmed image to the obstacle detection unit as the input image at a frequency higher than a frequency of transmitting an obstacle absence image including no obstacle to the obstacle detection unit as the input image. Since the trimmed image is the obstacle presence image including the obstacle, when the obstacle detection unit receives, as the input image, the trimmed image (the obstacle presence image) at a frequency higher than the obstacle absence image, the obstacle detection unit works efficiently.

In a case where a captured image includes a plurality of obstacles and the plurality of obstacles is apart from each other by a large distance, when one obstacle area is extracted by trimming in such a manner as to collectively include the plurality of obstacles, an area including no obstacle is large, which is wasted. In order to avoid this problem, as one of preferable examples of the configuration in which the input image is the trimmed image as the obstacle presence image, in a case where the at least one obstacle in the captured image includes a plurality of obstacles and respective obstacle areas of the plurality of obstacles are apart from each other by a predetermined distance or more, the trimming section may extract trimmed areas by trimming in such a manner that the trimmed areas include the obstacle areas, respectively.

Hereby, the obstacle detection unit efficiently detects each obstacle.

In a case where the captured image includes a plurality of obstacles and the plurality of obstacles is apart from each other by a small distance, it is efficient to extract one obstacle area by trimming in such a manner as to collectively include the plurality of obstacles. In view of this, as one of preferable examples of the configuration in which the input image is the trimmed image as the obstacle presence image, in a case where the at least one obstacle in the captured image includes a plurality of obstacles and respective obstacle areas of the plurality of obstacles are apart from each other by less than the predetermined distance, the trimming section may extract a trimmed area by trimming in such a manner that the trimmed area includes all the obstacle areas.

Similarly, in a case where the captured image includes a plurality of obstacles and obstacle areas of the plurality of obstacles occupy the captured image by a large area ratio, the dimension of the captured image is substantially the same as the dimension of the plurality of obstacle areas. Accordingly, it is not so advantageous to perform trimming on the captured image, and the trimming may rather decrease the efficiency. In view of this, as one of preferable examples of the configuration in which the input image is the trimmed image as the obstacle presence image, in a case where the at least one obstacle in the captured image includes a plurality of obstacles and obstacle areas of the plurality of obstacles occupy the captured image by a predetermined area ratio or more, the image transfer processing section may transmit the captured image to the obstacle detection unit as the input image.

Since it is possible to calculate a direction or a speed of the obstacle to move based on obstacle positional information generated over time, a subsequent position of the obstacle is predicted based on an acquired moving direction or an acquired traveling speed of the obstacle.

By adjusting the trimmed area with the use of this prediction, it is possible to restrain such a problem that at least part of the obstacle is lacked in the trimmed image. In view of this, as one of preferable examples of the configuration in which the input image is the trimmed image as the obstacle presence image, in a case where movement of the at least one obstacle is detected by evaluating the obstacle positional information over time, the trimmed area may be expanded in a direction of the movement, or the trimmed area may be moved in the direction of the movement. Hereby, the obstacle detection unit efficiently detects each obstacle.

In a case where the obstacle is present near the work vehicle including this obstacle detection system, the obstacle occupies a large part of the captured image, and even when the captured image is directly transmitted to the obstacle detection unit as the input image, the obstacle detection unit can detect the obstacle and output obstacle detection information on the obstacle with high reliability. In view of this, in the present invention, in a case where the work vehicle is apart from the at least one obstacle by a determination distance or less, the image transfer processing section may transmit the captured image to the obstacle detection unit as the input image with no change of the time interval.

It is favorable to use a neural network, particularly, deep learning, which can accurately distinguish types (human, animal, and the like) of obstacles from each other, as the obstacle detection unit that receives an image acquired by preprocessing the captured image as the input image. Particularly, in the deep learning, an increase in the frequency of inputting the input image improves accuracy of obstacle detection, and therefore, it is favorable to apply the deep learning to the present invention. **In** view of this, in the present invention, the obstacle detection unit may be a trained unit using deep learning, and the obstacle detection information output based on the input image may include a type of the at least one obstacle.

### Brief Description of Drawings

Fig. 1 is a side view of a tractor as an example of a work vehicle including an obstacle detection system;
Fig. 2 is a schematic plan view of the tractor to describe an attachment position of an imaging camera;
Fig. 3 is a functional block diagram of an electronic control system;
Fig. 4 is a schematic view illustrating a basic concept of image transfer by an image transfer processing section;
Fig. 5 is a functional block diagram of the image transfer processing section;
Fig. 6 is a schematic view illustrating an example of an obstacle state in an obstacle presence image;
Fig. 7 is a schematic view illustrating an example of the obstacle state in the obstacle presence image;
Fig. 8 is a schematic view illustrating an example of the obstacle state in the obstacle presence image;
Fig. 9 is a schematic view illustrating an example of the obstacle state in the obstacle presence image; and
Fig. 10 is a schematic view illustrating an example of the obstacle state in the obstacle presence image.

### Description of Embodiments

Note that, in the present specification, "front" indicates a front side in a body front-rear direction (a travel direction), and "rear" indicates a rear side in the body front-rear direction (the travel direction), unless otherwise specified. A right-left direction or a lateral direction indicates a body transverse direction (a body width direction) perpendicular to the body front-rear direction. "Top" or "bottom" is a positional relationship in a body vertical direction and indicates a relationship in terms of height above the ground.

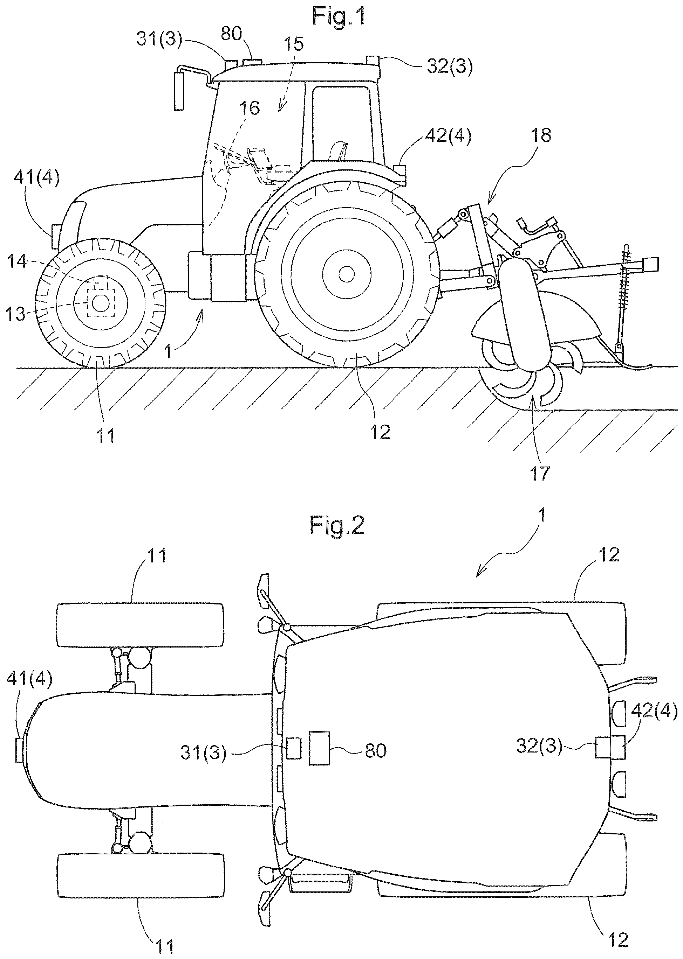

Next will be described a tractor configured to manually or automatically travel in a farm field as a work vehicle including an obstacle detection system according to the present invention, with reference to the drawings. In an embodiment illustrated in Figs. 1, 2, the tractor includes a driving section 15 in a central portion of a vehicle body 1 supported on front wheels 11 and rear wheels 12. The tractor includes a work device 17 in the rear of the vehicle body 1, as a rotary cultivating device via a hydraulic raising and lowering mechanism 18. The front wheels 11 function as steering control wheels, and the travel direction of the tractor is changed in response to change of the steering angles of the front wheels 11. The steering angles of the front wheels 11 are changed in response to the operation of a steering mechanism 13. The steering mechanism 13 includes a steering motor 14 for automatic steering. In the case of manual traveling, the front wheels 11 are steered by the operation of a steering wheel 16 provided for the driving section 15.

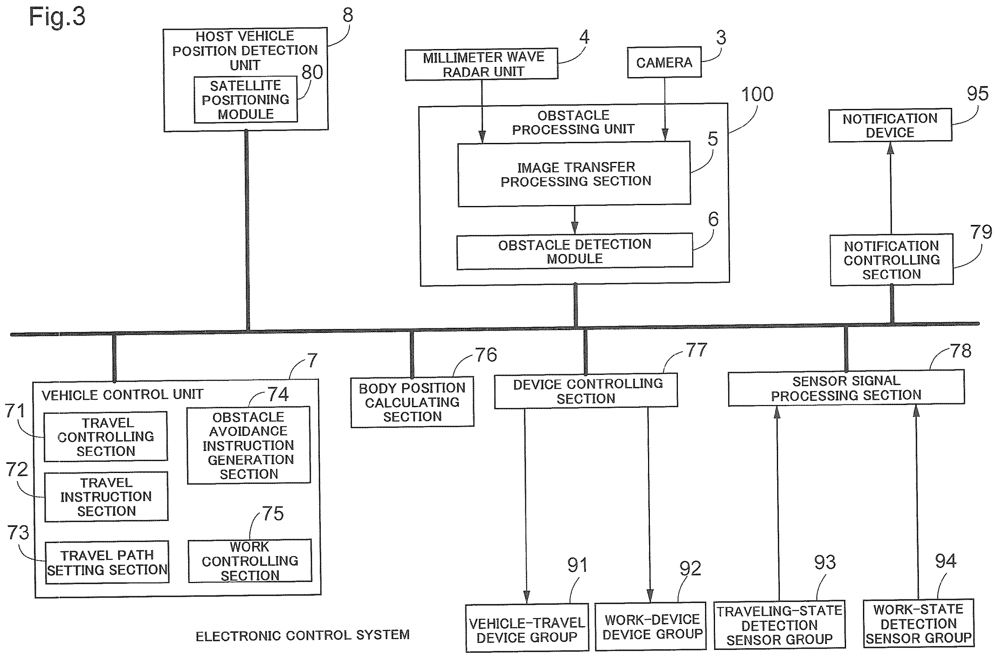

A satellite positioning module 80 constituting a host vehicle position detection unit 8 (see Fig. 3) is attached to the top surface of a ceiling of a cabin as the inside of the driving section 15. The satellite positioning module 80 receives a signal (a GPS signal or the like) of a GNSS (Global Navigation Satellite System) from a positioning satellite GS and acquires a body position. Note that, in order to supplement satellite navigation by the satellite positioning module 80, the satellite positioning module 80 includes an inertial navigation module including a gyro acceleration sensor and a magnetic azimuth sensor. Of course, an inertial navigation module unit may be provided separately from the satellite positioning module 80.

The tractor includes a camera 3 as an image capturing section configured to capture an image of a farm field including at least a forward area toward which the vehicle body 1 travels and to generate and output the captured image of the farm field as an obstacle detection target area. The camera 3 may be a static image camera or may be a moving image camera. The camera 3 includes a front camera 31 and a rear camera 32. The front camera 31 is provided in the front of the vehicle body 1 and captures an image of an area forward of the vehicle body 1. The rear camera 32 is provided in the rear of the vehicle body 1 and captures an image of an area rearward of the vehicle body 1. Although not illustrated herein, the camera 3 may include a left camera configured to capture an image of an area leftward of the vehicle body 1, and a right camera configured to capture an image of an area rightward from the vehicle body 1. Note that, in the following description, a forward captured image output from the front camera 31 and a rearward captured image output from the rear camera 32 are both handled as a captured image output from the camera 3, unless they need to be distinguished from each other.

The tractor also includes a millimeter wave radar unit 4 as an obstacle detection unit configured to scan an obstacle as a reflector and output obstacle positional information including a three-dimensional position of the obstacle. The millimeter wave radar unit 4 includes a front millimeter wave radar unit 41 and a rear millimeter wave radar unit 42. The front millimeter wave radar unit 41 is provided in the front of the vehicle body 1 and scans an area forward of the vehicle body 1. The rear millimeter wave radar unit 42 is provided in the rear of the vehicle body 1 and scans an area rearward of the vehicle body 1. Although not illustrated herein, the tractor may include, as the millimeter wave radar unit 4, a left millimeter wave radar unit configured to scan an area leftward from the vehicle body 1, and a right millimeter wave radar unit configured to scan an area rightward from the vehicle body 1. Note that, in the following description, respective pieces of obstacle positional information output from the front millimeter wave radar unit 41 and the rear millimeter wave radar unit 42 are handled as obstacle positional information output from the millimeter wave radar unit 4, unless they need to be distinguished from each other.

The tractor may include a LiDAR unit or a stereo camera unit as the obstacle detection unit configured to output obstacle positional information, instead of the millimeter wave radar unit 4.

An image-capture range of the camera 3 and a scan range of the millimeter wave radar unit 4 are adjustable, and the image-capture range of the camera 3 and the scan range of the millimeter wave radar unit 4 are adjusted to fall within substantially similar ranges. Hereby, a position, on the captured image, of the obstacle detected by the millimeter wave radar unit 4, that is, an obstacle area on the captured image can be calculated based on the obstacle positional information output from the millimeter wave radar unit 4.

Fig. 3 illustrates a functional block diagram of an electronic control system of the tractor. The electronic control system in this embodiment is constituted by a large number of electronic control units called ECUS (in Fig. 3, one or more functional blocks are constituted by ECUS), various operation devices, a sensor group, a switch group, and a wiring network such as an in-vehicle LAN configured to perform data transmission therebetween. Positioning data from the satellite positioning module 80, a the captured image from the camera 3, the obstacle positional information from the millimeter wave radar unit 4 are input into an obstacle processing unit 100 via the in-vehicle LAN or the wiring network. In a case where an image-capture field view necessary for calculation of an image-capture area in the captured image of the camera 3 is not fixed (in a case where an image-capture visual field is changeable or zooming is performable), image-capture field view data on the image-capture field view is added to the captured image as image-capture visual field information.

A notification device 95 is a device configured to notify a driver or the like of an obstacle detection result, a work travel state, or the like, and is a liquid crystalline touch panel, a buzzer, a lamp, a speaker, a display, or the like.

The electronic control system includes a notification controlling section 79, a vehicle control unit 7, a body position calculating section 76, a device controlling section 77, a sensor signal processing section 78, and an obstacle processing unit 100.

The notification controlling section 79 generates notification data based on a request from each functional block of the electronic control system and transmits it to the notification device 95. The body position calculating section 76 calculates a body position that is at least one specific point of the vehicle body 1, e.g., a map coordinate (or a farm-field coordinate) of the center of the vehicle body, based on positioning data sequentially transmitted from the satellite positioning module 80.

The device controlling section 77 is connected to a vehicle-travel device group 91 and a work-device device group 92. The vehicle-travel device group 91 includes control devices for vehicle traveling, for example, an engine control device, a shifting control device, a braking control device, a steering control device, and so on. The work-device device group 92 includes operation devices for operating a work device 17 such as a cultivator and the raising and lowering mechanism 18, which are attached to the tractor.

The sensor signal processing section 78 is connected to a traveling-state detection sensor group 93, a work-state detection sensor group 94, and so on. The traveling-state detection sensor group 93 includes sensors configured to detect the states of an engine rotation speed adjustment tool, an accelerator pedal, a brake pedal, a shift operation tool, and so on. The work-state detection sensor group 94 includes a sensor configured to detect the state of the work device 17 attached to the tractor.

The vehicle control unit 7 has a function to cause the vehicle body 1 to travel and work by any of an automatic travel control, a manual travel control, and a remote travel control. The vehicle control unit 7 includes a travel controlling section 71, a travel instruction section 72, a travel path setting section 73, an obstacle avoidance instruction generation section 74, and a work controlling section 75.

The travel controlling section 71 has an engine control function, a steering control function, a vehicle speed control function, and so on and transmits a travel control signal to the vehicle-travel device group 91. The work controlling section 75 transmits a work control signal to the work-device device group 92 to control the movement of the work device 17 attached to the vehicle body 1.

The travel path setting section 73 loads a travel path for automatic travel into a memory. The travel path thus loaded into the memory is sequentially used as a target travel path in automatic travel. This travel path is also usable for manual travel as a guidance for the tractor to travel along the travel path.

The travel instruction section 72 generates an automatic steering instruction and a vehicle speed instruction as an automatic travel instruction and transmits it to the travel controlling section 71. The automatic steering instruction is generated to eliminate an orientation difference and a positional difference between the travel path set by the travel path setting section 73 and a self-position calculated by the body position calculating section 76. In the automatic travel, the vehicle speed instruction is generated based on a vehicle speed value determined in advance. In the manual travel, the vehicle speed instruction is generated based on a manual vehicle speed operation. However, in a case where an emergency event occurs, e.g., a case where an obstacle is detected, vehicle speed changing including forced stop, engine shutdown, or the like is performed automatically.

In a case where an automatic travel mode is selected, the travel controlling section 71 controls the vehicle-travel device group 91 as for steering or the vehicle-travel device group 91 as for vehicle speed based on an automatic travel instruction transmitted from the travel instruction section 72. In a case where a manual travel mode is selected, the travel controlling section 71 generates a control signal based on an operation performed by the driver and controls the vehicle-travel device group 91.

The obstacle processing unit 100 has a function to detect the position and the type of the obstacle (the reflector) based on the obstacle positional information from the millimeter wave radar unit 4 and the captured image from the camera 3. The obstacle processing unit 100 includes an image transfer processing section 5 and an obstacle detection unit 6. The obstacle detection unit 6 is a learning unit trained to output obstacle detection information based on an input image (a captured image) transmitted from the image transfer processing section 5. In this embodiment, the obstacle detection unit 6 is a learning obstacle recognition unit using deep learning, and the obstacle detection information output based on the input image (the captured image) includes the type of the obstacle as an obstacle detection result.

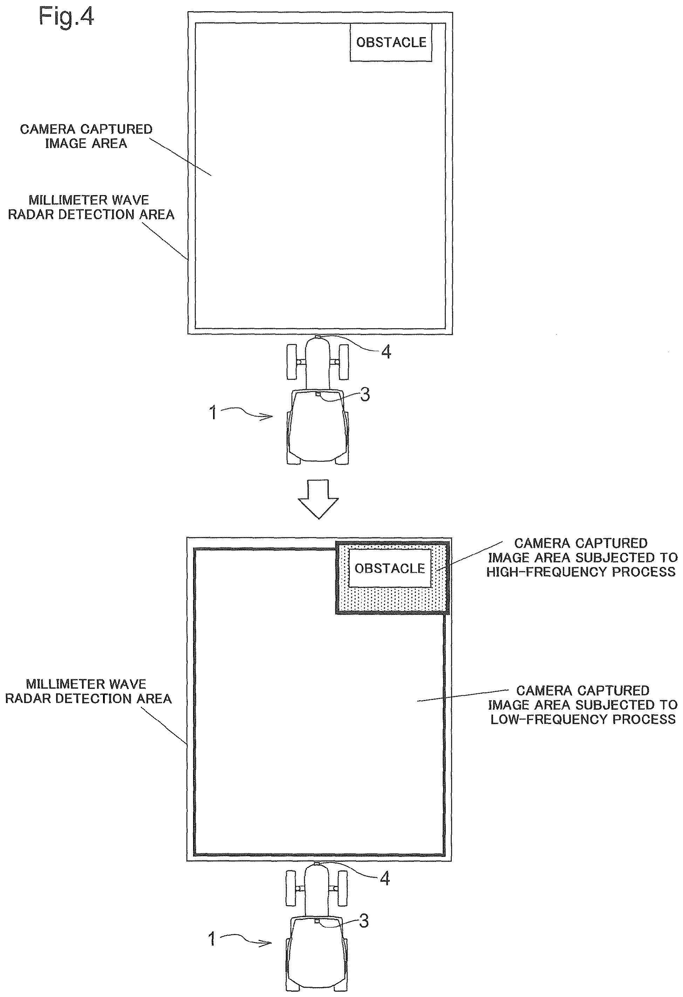

Next will be described a basic concept of image transfer by the image transfer processing section 5, with reference to Fig. 4. In the related art, the transfer of an input image to the obstacle detection unit 6 is substantially performed at a constant frequency (frame transfer frequency). However, the image transfer processing section 5 of the present invention transfers, as an input image, a camera captured image area including an obstacle detected by the millimeter wave radar unit 4 in a camera captured image to the obstacle detection unit 6 at a high frequency as compared to a camera captured image area including no obstacle. In order to raise obstacle recognition accuracy in the obstacle detection unit 6, it is necessary to increase the number of input images to be input into the obstacle detection unit 6 by increasing the frame transfer frequency and to increase the number of times of an obstacle recognition process, and to that end, a computing device (CPU/GPU) having high throughput is required. Such a computing device is also used for other processes, and if a burden to the obstacle recognition process becomes large, the other processes are adversely affected. In order to reduce this problem, the image transfer processing section 5 sorts input images into images more likely to include an obstacle and images less likely to include an obstacle, transfers the images more likely to include an obstacle to the obstacle detection unit 6 at a high frequency, and transfers the images less likely to include an obstacle to the obstacle detection unit 6 at low frequency. As a result, the images more likely to include an obstacle are subjected to the obstacle recognition process at a high frequency, and the images less likely to include an obstacle are subjected to the obstacle recognition process at low frequency. Hereby, a burden on the computing device is reduced, and a high obstacle recognition accuracy is achieved.

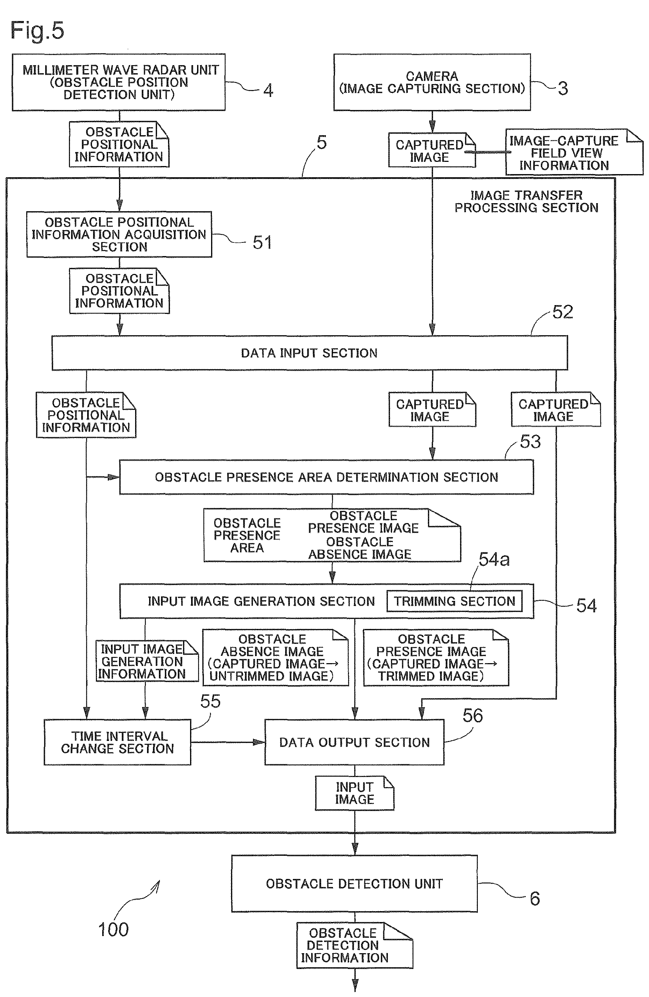

As illustrated in Fig. 5, the image transfer processing section 5 has a function to transmit a captured image or an input image based on the captured image to the obstacle detection unit 6 at a predetermined time interval. The image transfer processing section 5 includes an obstacle positional information acquisition section 51, a data input section 52, an obstacle presence area determination section 53, an input image generation section 54, a time interval change section 55, and a data output section 56.

The obstacle positional information acquisition section 51 acquires obstacle positional information from the millimeter wave radar unit 4 as an obstacle position detection unit configured to generate obstacle positional information on an obstacle in an obstacle detection target area. Although not illustrated herein, the obstacle positional information acquisition section 51 adds a self-position calculated by the body position calculating section 76 to the obstacle positional information.

The data input section 52 collates the obstacle positional information transmitted from the obstacle positional information acquisition section 51 in a given cycle with the captured image transmitted from the camera 3 in a given cycle and transmits them to the obstacle presence area determination section 53. Obstacle point group data which is generated in a case where the millimeter wave radar unit 4 detects an obstacle and which is included in the obstacle positional information is linked with a captured image taken at the time of generation of the obstacle point group data.

The obstacle presence area determination section 53 sorts captured images into an obstacle absence image including no obstacle and an obstacle presence image including an obstacle, based on the obstacle positional information received from the data input section 52. The obstacle presence area determination section 53 refers to the obstacle point group data and calculates obstacle presence area data indicating an obstacle presence area including the obstacle in the obstacle presence image. The obstacle presence area data is added to the obstacle positional information.

The input image generation section 54 generates an input image to be input into the obstacle detection unit 6 based on the obstacle absence image (a captured image), the obstacle presence image (a captured image), and the obstacle presence area data received from the obstacle presence area determination section 53. The input image generation section 54 includes a trimming section 54a. The trimming section 54a generates a trimmed image obtained by extracting the obstacle presence area from the obstacle presence image (the captured image) as a trimmed area by trimming, based on the obstacle presence area data included in the obstacle positional information.

In a first configuration of the input image generation section 54, the input image generation section 54 generates an input image with a trimmed image being taken as an obstacle presence image which trimmed image is obtained by extracting an obstacle presence area including an obstacle from a captured image by trimming, and also generates an input image of an area other than the obstacle presence area in the captured image as an obstacle absence image. In the first configuration, the captured image is divided into a plurality of sections as input images, but it is preferable that a division size correspond to the obstacle presence area.

In a second configuration of the input image generation section 54, the input image generation section 54 generates an input image with a captured image including an obstacle as an obstacle presence image and generates an input image with a captured image including no obstacle as an obstacle absence image. The input image generation section 54 may have the first configuration or the second configuration or may be able to select either of the configurations. In either case, as will be described below, the obstacle detection unit 6 receives the obstacle presence image as the input image at a frequency higher than a frequency at which the obstacle detection unit 6 receives the obstacle absence image including no obstacle as the input image.

The time interval change section 55 has a function to change a time interval, that is, a frequency at which the obstacle detection unit 6 receives the input image via the data output section 56, based on the obstacle positional information.

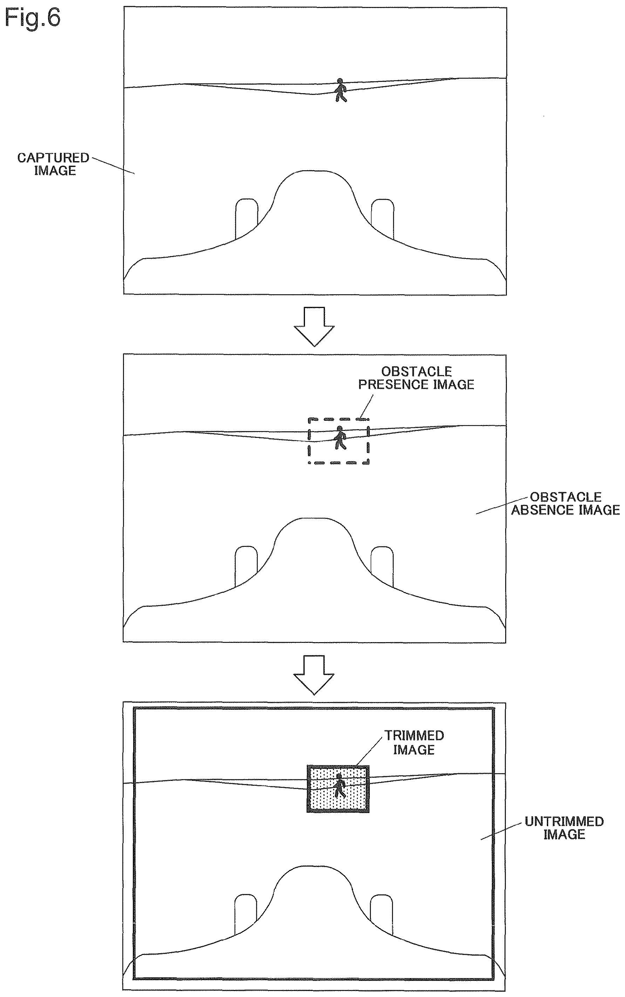

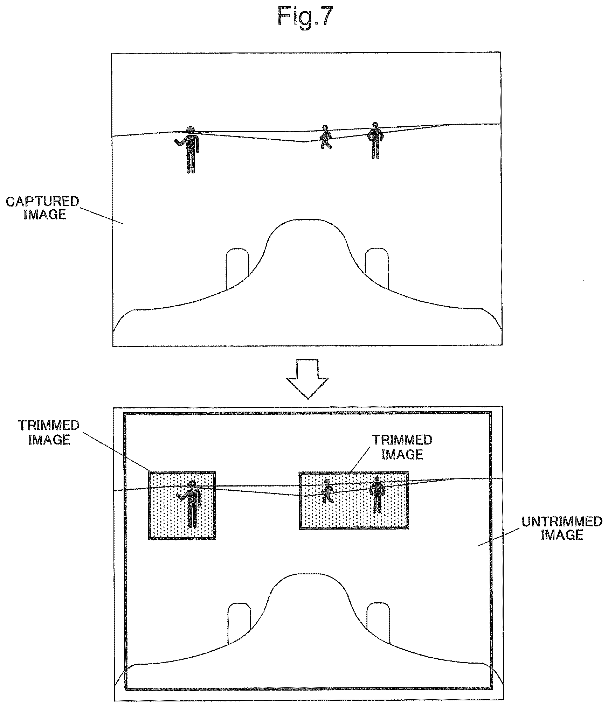

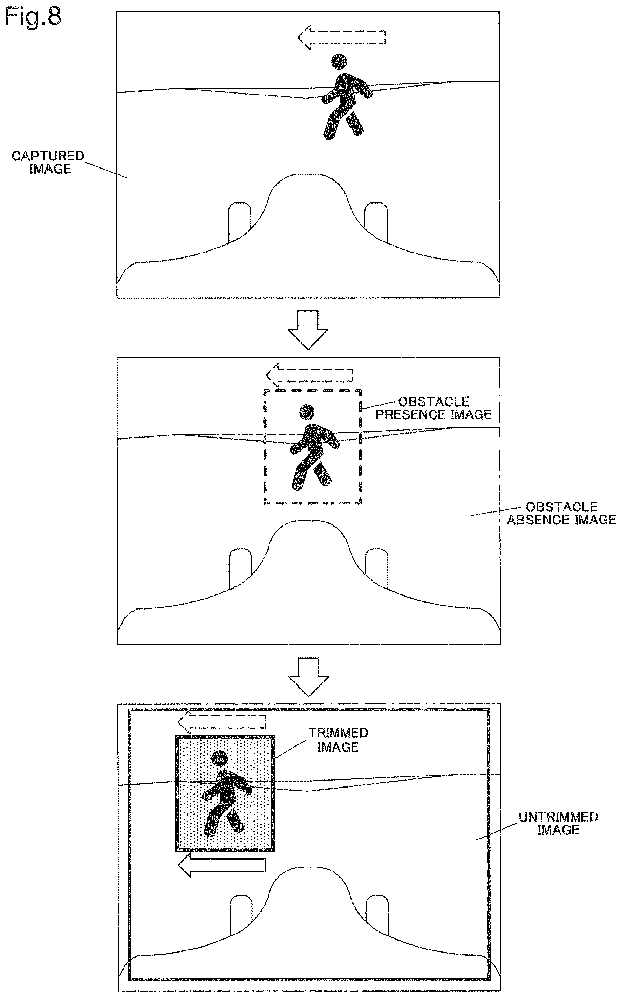

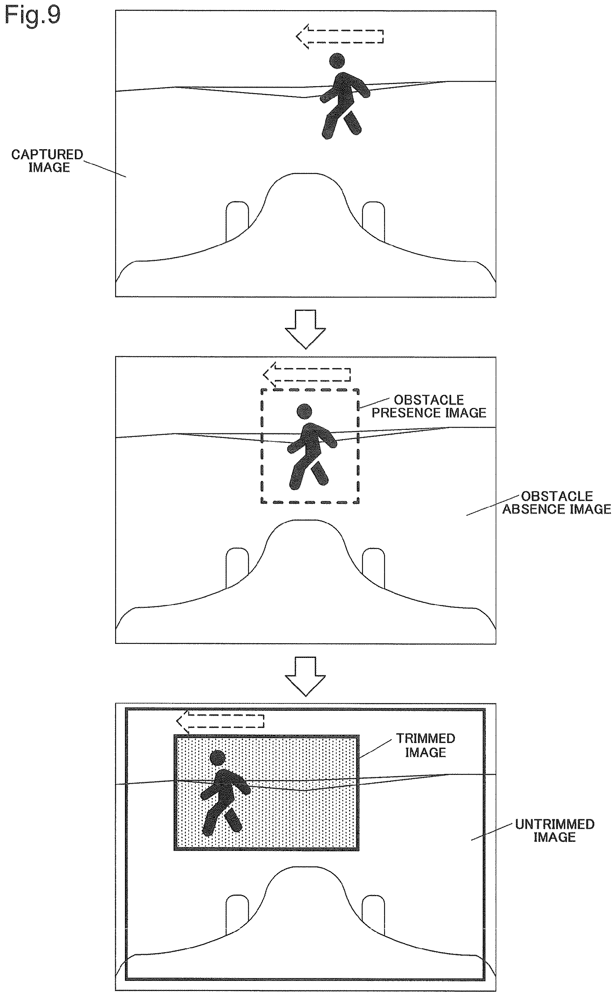

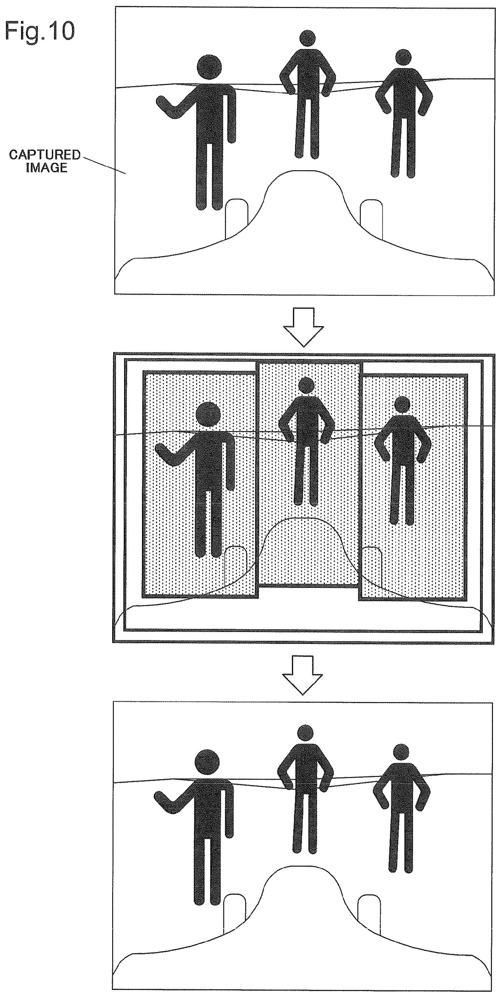

The input image generation section 54 performs various operations in response to the state of the obstacle in the obstacle presence image (the captured image) as described below.
(1) In a case where the captured image includes only one obstacle, an obstacle area including the obstacle is extracted by trimming. The time interval change section 55 adjusts the frequency of transmitting the trimmed image to the obstacle detection unit 6 as the input image to be larger than the frequency of transmitting the obstacle absence image of an area other than the obstacle area to the obstacle detection unit 6 as the input image (see Fig. 6).
(2) In a case where the captured image includes a plurality of obstacles and respective obstacle areas of the plurality of obstacles are apart from each other by a predetermined distance or more, the trimming section 54a extracts trimmed areas by trimming in such a manner that the trimmed areas include the obstacle areas, respectively. In a case where the captured image includes a plurality of obstacles and respective obstacle areas of the plurality of obstacles are apart from each other by less than the predetermined distance, the trimming section 54a extracts one trimmed area by trimming in such a manner that the one trimmed area includes all the obstacle areas apart from each other by less than the predetermined distance. In either case, the time interval change section 55 adjusts the frequency of transmitting a trimmed image to the obstacle detection unit 6 as the input image to be higher than the frequency of transmitting the obstacle absence image of an area other than the obstacle areas to the obstacle detection unit 6 as the input image (see Fig. 7).
(3) The movement of an obstacle is detectable by evaluating obstacle positional information over time. In response to detection of the movement of the obstacle, the obstacle positional information acquisition section 51 adds obstacle motion data indicating the speed or the direction of the movement to the obstacle positional information. In a case where the obstacle positional information includes the obstacle motion data, the trimming section 54a expands a trimmed area to the direction of the movement (see Fig. 8). Alternatively, the trimming section 54a expands a trimmed area to the direction of the movement (see Fig. 9).
(4) In a case where obstacle areas of a plurality of obstacles in a captured image occupy the captured image by a predetermined area ratio or more, the image transfer processing section 5 directly transmits the captured image (an obstacle presence image) to the obstacle detection unit 6 as the input image
(5) In a case where a distance to an obstacle is short, a captured image is occupied with the obstacle, and therefore, even when the captured image is used as the input image to the obstacle detection unit 6 as it is, the obstacle detection unit 6 can recognize the obstacle with high accuracy and can output obstacle detection information of good quality. On this account, regardless of whether only one obstacle is detected or a plurality of obstacles is detected, in a case where the work vehicle is apart from the obstacle or the plurality of obstacles by a determination distance or less, the image transfer processing section 5 does not perform a process of changing the time interval, and the image transfer processing section 5 directly transmits the captured image (the obstacle presence image) to the obstacle detection unit 6 as the input image (see Fig. 10).
(6) In a case where an obstacle once detected disappears in a predetermined time (for example, from one second to several seconds) based on evaluation performed on obstacle positional information over time, a captured image corresponding to the obstacle positional information is regarded as noise or the obstacle is considered to move outside the obstacle detection target area, and the process of changing the time interval is not performed, and the captured image is just transmitted to the obstacle detection unit 6.

The obstacle detection unit 6 is constituted by a machine learning neural network and uses a deep learning algorithm. The deep learning algorithm generally requires a high-performance operational unit. However, this neural network uses, as the input image, a trimmed image extracted by trimming from a captured image in such a manner as to include an area estimated to include the obstacle, and therefore, an effective result is quickly provided even when a high-performance operational unit is not used. The obstacle detection information to be output includes detection results of the type of the obstacle (human, animal, telephone pole, or the like), the position of the obstacle, and so on. A direction and a distance from the vehicle body 1 to the obstacle can be calculated based on the obstacle detection information and obstacle presence area information. The obstacle detection information is also transmitted to the notification controlling section 79 to notify obstacle detection.

In order to perform an obstacle avoidance control based on the direction and the distance from the vehicle body 1 to the obstacle, the obstacle avoidance instruction generation section 74 selects an optimum instruction from a deceleration instruction, a stop instruction, a turning instruction, and so on to the vehicle body 1 to generate an obstacle avoidance instruction, and transmits the obstacle avoidance instruction to the travel controlling section 71.

[Alternative Embodiments] (1) The functional blocks constituting the electronic control system illustrated in Fig. 3 and the functional blocks constituting the obstacle processing unit 100 illustrated in Fig. 5 are divided mainly for the purpose of description, and constituents may be freely integrated or each of the constituents may be freely divided. For example, the millimeter wave radar unit 4 may be divided into a millimeter wave radar and a unit configured to generate obstacle positional information from a detecting signal from the millimeter wave radar.

(2) In the above embodiment, a visible light camera including a wide angle lens is employed as the camera 3, but an infrared light camera or a hybrid camera including a visible light camera and an infrared light camera may be employed.

(3) Any attachment positions can be freely selected to attach the millimeter wave radar unit 4 and the camera 3, provided that the attachment positions allow the millimeter wave radar unit 4 and the camera 3 to cover the obstacle detection target area.

(4) In the above embodiment, the obstacle detection unit 6 is constituted by a machine learning neural network using a deep learning algorithm, but it is needless to say that the obstacle detection unit 6 may be constituted by a neural network using an algorithm other than the deep learning algorithm, for example, a reinforcement learning neural network. Alternatively, an image recognition technology other than the machine learning neural network may be employed.

(5) The above embodiment deals with a tractor as the farm work vehicle, but instead of this, a normal combine harvester, a head-feeding combine harvester, a rice transplanter, or the like may be used.

Note that the configurations described in the above embodiment (including the alternative embodiments; the same applies hereinafter) can be applied in combination with configurations of other embodiments as long as no inconsistency occurs. The embodiments described in the present specification are illustrative and should not be construed as limiting the present invention. Modifications to the present invention are permissible, as long as they do not deviate from the scope that can achieve the objects of the present invention.

### Industrial Applicability

The present invention can be applied to a work vehicle required to detect an obstacle.

### Description of Reference Numerals

3: camera
4: millimeter wave radar unit
5: image transfer processing section
6: obstacle detection unit
7: vehicle control unit
8: host vehicle position detection unit
51: obstacle positional information acquisition section
52: data input section
53: obstacle presence area determination section
54: input image generation section
54a: trimming section
55: time interval change section
56: data output section
71: travel controlling section
76: body position calculating section
100: obstacle processing unit

## Claims

1. An obstacle detection system for a work vehicle, comprising:
an image capturing section configured to generate and output a captured image of an obstacle detection target area;
an obstacle positional information acquisition section configured to acquire obstacle positional information on at least one obstacle in the obstacle detection target area;
a learning-type obstacle detection unit trained to output obstacle detection information including a detection result of the at least one obstacle based on an input image; and
an image transfer processing section configured to transmit the input image based on the captured image to the obstacle detection unit at a predetermined time interval, the image transfer processing section including a time interval change section configured to change the time interval based on the obstacle positional information.

2. The obstacle detection system according to claim 1, wherein
the obstacle positional information acquisition section acquires the obstacle positional information including a three-dimensional position of the at least one obstacle from an obstacle position detection unit including at least one of a millimeter wave radar unit, a LiDAR unit, and a stereo camera unit.

3. The obstacle detection system according to claim 1 or 2, wherein
the captured image is classified as an obstacle absence image including no obstacle or an obstacle presence image including the at least one obstacle based on the obstacle positional information and the captured image, and
the image transfer processing section transmits the obstacle presence image to the obstacle detection unit as the input image at a frequency higher than a frequency of transmitting the obstacle absence image to the obstacle detection unit as the input image.

4. The obstacle detection system according to any one of claims 1 to 3, wherein
the image transfer processing section includes a trimming section configured to generate, as the input image, a trimmed image by extracting an area including the at least one obstacle from the captured image as a trimmed area by trimming based on the obstacle positional information.

5. The obstacle detection system according to claim 4, wherein
the image transfer processing section transmits the trimmed image to the obstacle detection unit as the input image at a frequency higher than a frequency of transmitting an obstacle absence image including no obstacle to the obstacle detection unit as the input image.

6. The obstacle detection system according to claim 4 or 5, wherein
in a case where the at least one obstacle in the captured image includes a plurality of obstacles and respective obstacle areas of the plurality of obstacles are apart from each other by a predetermined distance or more, the trimming section extracts trimmed areas by trimming in such a manner that the trimmed areas include the obstacle areas, respectively.

7. The obstacle detection system according to any one of claims 4 to 6, wherein
in a case where the at least one obstacle in the captured image includes a plurality of obstacles and respective obstacle areas of the plurality of obstacles are apart from each other by less than a predetermined distance, the trimming section extracts a trimmed area by trimming in such a manner that the trimmed area includes all the obstacle areas.

8. The obstacle detection system according to any one of claims 4_to 7, wherein
in a case where the at least one obstacle in the captured image includes a plurality of obstacles and obstacle areas of the plurality of obstacles occupy the captured image by a predetermined area ratio or more, the image transfer processing section transmits the captured image to the obstacle detection unit as the input image.

9. The obstacle detection system according to any one of claims 4 to 8, wherein
in a case where movement of the at least one obstacle is detected by evaluating the obstacle positional information over time, the trimmed area is expanded in a direction of the movement, or the trimmed area is moved in the direction of the movement.

10. The obstacle detection system according to any one of claims 1_to 8, wherein
in a case where the work vehicle is apart from the at least one obstacle by a determination distance or less, the image transfer processing section transmits the captured image to the obstacle detection unit as the input image with no change of the time interval.

11. The obstacle detection system according to any one of claims 1 to 9, wherein
the obstacle detection unit is a trained unit using deep learning, and
the obstacle detection information output based on the input image includes a type of the at least one obstacle.
